# EUROPÄISCHE PATENTANMELDUNG

(11) **EP 0 712 875 A1**
(43) Veröffentlichungstag der Anmeldung: **22.05.1996**
(21) Anmeldenummer: 95115197.6
(22) Anmeldetag: 27.09.1995
(51) Int. Cl.: C08F 222/06, C08F 222/16, C08F 212/08, D21H 17/00

(54) **Verfahren zur Herstellung eines Leimungsmittelvorproduktes**

(30) Priorität: 21.11.1994 DE 4441302
(71) Anmelder: LEUNA-WERKE GMBH, D-06236 Leuna (DE)
(72) Erfinder: Gaikowski, Manfred, Dr., D-06618 Naumburg (DE); Wendt, Hans-Dietrich, D-06193 Gutenberg (DE)
(74) Vertreter: Schinke, Herbert, Dr. Dr., Patentanwaltskanzlei

(57) **Zusammenfassung**

2.1. Zu entwickeln war ein Verfahren mit einfacher Reaktionsführung und geringem apparativen Aufwand für die Herstellung eines pulverförmigen Leimungsmittelvorproduktes auf Basis eines Polymeren mit erhöhtem Styrengehalt, das durch Lösen in wäßrigem Ammoniak sofort als Lösungsmittel für Papier und Karton eingesetzt werden kann und dessen wäßrige Lösung gut handhabbar ist.

2.2. Durch radikalische Blockpolymerisation in niedrig siedenden aldehydischen oder ketonischen Lösungsmitteln wird ein Produkt auf Basis von MSA/Maleinsäurehalbester/Styren-Terpolymeren hergestellt, indem in einem Reaktor 20 bis 30 Masseteile Lösungsmittel, 20 bis 25 Masseteile Maleinsäurehalbester und 40 bis 50 Masseteile Styren vorgelegt werden, dann auf eine Polymerisationstemperatur von 80 bis 130 °C aufgeheizt wird und ein Gemisch aus 5 bis 15 Masseteilen MSA, 1,5 bis 2 Masseteilen Initiator und 45 bis 60 Masseteilen Lösungsmittel innerhalb von 2 bis 5 h unter Rühren des Reaktionsmediums zudosiert, die anfallende Polymerlösung auf einen Zweiwalzentrockner geleitet und der sich bei einer Walzentemperatur von 70 bis 150 °C bildende Polymerbelag in Form eines Pulvers abgestreift wird.

2.3. Leimung von Papier und Karton.

## Beschreibung

Die Erfindung betrifft ein Verfahren zur Herstellung eines Leimungsmittelvorproduktes für Papier und Karton auf der Basis von MSA/Maleinsäurehalbester/Styren-Terpolymeren.

Es ist bekannt, daß Maleinsäurehalbester-Copolymere in Form ihrer wäßrigen Ammoniumsalzlösungen als Leimungsmittel für Papier und Karton eingesetzt werden (DE 1811579).

Ebenfalls bekannt ist, daß Leimungsmittel in wäßriger Form mit 10 bis 25 % Feststoffanteil gehandelt werden. Speziell bei großen Entfernungen zwischen Produzent und Anwender treten durch den hohen Wasseranteil erhöhte Transportkosten auf. Vorteilhaft sind daher sogenannte Leimungsmittelvorprodukte, die in Form von Pulver angeliefert und erst beim Verbraucher durch Lösen in Ammoniakwasser in die wäßrige Form überführt werden. Bisher bekannte Verfahren der Pulverherstellung aus Suspensionspolymerisaten sind apparativ sehr aufwendig. Eine andere Variante ist das Pulverisieren von Massepolymerisat durch Mahlen.

Bekannt ist auch, daß alternierend aufgebaute Maleinsäurehalbester/Styren-Copolymere aufgrund ihrer zu hydrophilen Eigenschaften nur mäßige Leimungmittel sind.

Günstige Leimungseigenschaften werden mit statistisch aufgebauten Copolymeren erzielt, die einen Styrenüberschuß enthalten. Lewis und Mayo weisen darauf hin (J. Am. chem. Soc. 70, Seite 1533), daß es aufgrund der Lage der r-Werte schwierig ist, statistisch aufgebaute Maleinsäurehalbester/Styren-Copolymere mit erhöhtem Styrengehalt zu erhalten.
Bekannt ist, daß Maleinsäurehalbester/Styren-Copolymere thermisch instabil sind.

Bereits bei 130 °C erfolgt eine Alkoholabspaltung (DE 3228480) unter Rückbildung der Anhydridstruktur.
Bekannt ist weiterhin, daß die Maleinsäurehalbester/Styren-Copolymere je nach Molekulargewicht und Styrenanteil eine Glastemperatur T_{G} von 130 bis 220 °C aufweisen, so daß für ihre plastische Handhabung Temperaturen über 200 °C angewendet werden müssen.

Aus diesem Grund sind Masseverfahren zur Polymerisation ungeeignet. Gleichzeitig bedeutet dies, daß man bei der Polymerisolierung unterhalb 130 °C arbeiten muß und gebräuchliche Methoden zur Pulverherstellung über eine extrudive Stufe zur Lösungsmittel- oder Restmonomerenabtrennung mit anschließendem Mahlen ungeeignet sind.

In DE 3703551 werden unter anderem Papierleime auf der Basis von statistisch aufgebauten Maleinsäureester/Styren-Copolymeren beschrieben. Ihre Herstellung erfolgt durch eine nachträgliche Veresterung von statistisch polymerisierten MSA/Styren-Copolymeren.
Ungünstig an dieser Variante ist, daß man zunächst durch eine kontinuierliche Massepolymerisation das MSA/Styren-Copolymere herstellen, es dann in einem organischen Lösungsmittel lösen, danach verestern und schließlich das Lösungsmittel wieder entfernen muß.

In DE 2828630 wird die Herstellung der statistisch aufgebauten Copolymeren als Massepolymerisation in einem Kneter beschrieben. Bei diesem Verfahren erhält man am Ende der Polymerisation durch die Scherkraftwirkung ein körniges Produkt.

In DE 3228480 wird ein kontinuierliches Masseverfahren vorgeschlagen, wobei der Halbester proportionsweise zudosiert wird.

Der Nachteil der Masseverfahren ist, daß aufgrund der hohen Temperaturen Zersetzungen und Alkoholabspaltung auftreten und außerdem aufwendige Apparatesysteme erforderlich sind.

Gemäß DE 2529433 werden Maleinsäureester/Styren-Copolymere durch eine Suspensionspolymerisation in Wasser hergestellt, wobei das Styren vorgelegt und der Halbester unter Polymerisationsbedingungen zudosiert wird.

Nach USP 3287149 wird ein Maleinsäureester/Styren-Copolymeres mit einem Molverhältnis von 0,5 bis 2,2 Mol Styren je Halbester dadurch erhalten, daß man den Alkohol, MSA und ein Peroxid vorlegt und bei etwa 100 °C innerhalb 1 Stunde das Styren zudosiert. Als Lösungsmittel dient überschüssiger Alkohol.

Eigene Untersuchungen zeigten, daß reine Maleinsäurehalbester/Styren-Copolymere mit steigendem Styrengehalt den Nachteil aufweisen, daß ihre wäßrigen Ammoniumsalzlösungen sehr hochviskos bis pastös werden, so daß sie schlecht handhabbar sind.

Es bestand somit die Aufgabe der Entwicklung eines Verfahrens zur Herstellung eines pulverförmigen Leimungsmittelvorproduktes auf Basis eines Polymeren mit erhöhtem Styrengehalt, das durch Lösen in wäßrigem Ammoniak sofort als Leimungsmittel für Papier und Karton eingesetzt werden kann und dessen wäßrige Lösung gut handhabbar ist. Das Verfahren soll sich dabei durch eine einfache Reaktionsführung und einen geringen apparativen Aufwand auszeichnen.

Die Aufgabe wird durch eine radikalische Blockpolymerisation in einem niedrig siedenden aldehydischen oder ketonischen Lösungsmittel gelöst, indem erfindungsgemäß in einem Reaktor 20 bis 30 Masseteile des Lösungsmittels, 20 bis 25 Masseteile eines Maleinsäurehalbesters und 40 bis 50 Masseteile Styren vorgelegt werden, dann auf eine Polymerisationstemperatur von 80 bis 130 °C, vorzugsweise 90 bis 120 °C, aufgeheizt wird und bei dieser Temperatur ein Gemisch aus 5 bis 15 Masseteilen MSA, 1,5 bis 2 Masseteilen eines Initiators und 45 bis 60 Masseteilen des Lösungsmittels innerhalb von 2 bis 5 Stunden unter Rühren des Reaktionsmediums zudosiert, die anfallende Polymerlösung auf einen Zweiwalzentrockner geleitet und der sich bei einer Walzentemperatur von 70 bis 150 °C, vorzugsweise 80 bis 120 °C, auf den Walzen bildende Polymerbelag in Form eines Pulvers abgestreift wird.
Mit Vorteil wird als Lösungsmittel Aceton oder Methylethylketon eingesetzt.
Die nach dem erfindungsgemäßen Verfahren eingesetzten Halbester sind dabei Umsetzungsprodukte von MSA mit primären oder sekundären C₁-C₆ Alkoholen im Molverhältnis 1:1.
Als Initiatoren werden vorteilhaft Peroxide verwendet, die im Polymerisationsbereich eine Halbwertszeit von 0,1 bis 3 h aufweisen.

Beim erfindungsgemäßen Verfahren entstehen Polymergemische aus Maleinsäurehalbester/Styren-Copolymeren, Maleinsäurehalbester/MSA/Styren-Terpolymeren und MSA/Styren-Copolymeren etwa im Verhältnis 10 : 80 : 10 mit unregelmäßiger Blockverteilung der Reaktionskomponenten.
Herstellbar sind Polymerisate im Molekulargewichtsbereich von 10.000 bis 100.000. Ein bevorzugtes Molekulargewicht für die Herstellung des Leimungsmittels liegt zwischen 20.000 und 60.000.
Die nach dem erfindungsgemäßen Verfahren erhaltenen Mischpolymerisate zeichnen sich durch eine enge Molekulargewichtsverteilung und ein günstiges Löseverhalten in wäßrigem NH₄OH aus.

Überraschend wurde gefunden, daß diese Polymerzusammensetzung die Eigenschaft aufweist, daß sie sich beim schlagartigen Abdampfen des Lösungsmittels zu einem spröden Hartschaum aufbläht, der sehr leicht durch mechanische Einwirkung in Pulver zerfällt. Als Verdampfungsaggregat eignen sich handelsübliche Zweiwalzentrockner.
Das erfindungsgemäße Verfahren zeichnet sich durch folgende Vorteile aus:
- Die Polymerisation kann in einem handelsüblichen Rührwerk durchgeführt werden.
- Als Rohstoffe werden nur MSA, Styren und ein Alkohol benötigt.
- Man kann ohne größeren technischen Aufwand aus der anfallenden Polymerlösung ein pulverförmiges Leimungsmittelvorprodukt herstellen.
- Das Leimungsmittelvorprodukt ist gut löslich in wäßrigem NH₄OH und die so erhältliche Leimlösung ist gut handhabbar und kann direkt als Leimungsmittel für Papier und Karton eingesetzt werden.

### Ausführungsbeispiele

### Beispiel 1

In einem 5 l Rührwerk mit Kühlsystem und Dosiervorrichtung werden 720 g Styren, 360 g Maleinsäureisopropylhalbester und 400 ml Aceton vorgelegt und auf 120 °C erwärmt. Bei 120 °C wird innerhalb von 2,5 h ein Gemisch aus 1000 ml Aceton, 90 g MSA und 26 g tert.-Butyl-peroxybenzoat gleichmäßig zudosiert.
Nach beendeter Zugabe des Gemisches wird die Temperatur noch eine Stunde gehalten. Danach wird die acetonische Polymerlösung in einem Zweiwalzentrockner der Fa. Vakuumtechnik Sangerhausen aufgearbeitet.

### Parameter:

| | |
|---|---|
| Walzentemperatur | 110-115 °C |
| Walzenspalt | 1 mm |
| Dosiergeschwindigkeit | 10 l/h |
| Vakuum | 39,9 - 53,2 kPa |

Man erhält ein Pulver mit einer Restfeuchte von 5 bis 8 Masse-%. Das Pulver wird im Vakuumtrockenschrank bei 100 °C und 0,133 kPa nachgetrocknet:

### Kenndaten des Pulvers:

| | |
|---|---|
| Restaceton | 0,50 Masse-% |
| Reststyren | 0,06 Masse-% |
| Säurezahl | 200 mg KOH/g Polymeres |
| M_{w} | 40 500 |
| Durchschnittliches Molverhältnis MSA/Maleinsäurehalbester/Styren = 1 : 2,5 : 7,5 | |

### Beispiel 2

In einem 5l Rührwerk mit Kühlsystem und Dosiervorrichtung werden 750 g Styren, 360 g Maleinsäureisopropylhalbester und 400 ml Aceton vorgelegt und auf 90 °C erhitzt. Bei 90 °C wird innerhalb von 2,5 h ein Gemisch aus 1000 ml Aceton, 190 g MSA und 30 g tert-Butylperoxy-2 ethylhexanoat gleichmäßig zudosiert.
Nach beendeter Zugabe des Gemisches wird die Temperatur noch eine Stunde bei 90 °C gehalten. Danach wird die acetonische Polymerlösung wie im Beispiel 1 auf einem Zweiwalzentrockner aufgearbeitet und im Vakuumtrockenschrank nachgetrocknet.

### Kenndaten des Pulvers:

| | |
|---|---|
| Restaceton | 0,30 Masse-% |
| Reststyren | 0,07 Masse-% |
| Säurezahl | 265 mg KOH/g Polymeres |
| M_{w} | 38 500 |
| Molverhältnis MSA/Maleinsäurehalbester/Styren = 1 : 1,2 : 3,7 (Durchschnitt) | |

### Herstellung des Leimungsmittels aus dem jeweiligen Pulver

In einem Rührwerk werden 820 ml Wasser und 50 ml NH₄OH (25%ig) vorgelegt und unter Rühren 130 g Pulver eindosiert. Nach der Eindosierung wird auf 60 °C erwärmt und solange gerührt, bis das Pulver gelöst ist.

### Vergleichsbeispiel

In einem Rührwerk mit Rückflußkühler werden 50 ml Toluol vorgelegt und auf 120 °C erhitzt. Bei 120 °C werden innerhalb von 3 h ein Gemisch aus 60 g Maleinsäureisopropylhalbester, 70 g Styren, 2,5 g tert-Butyl-peroxybenzoat und 70 ml Toluol zudosiert.
Nach beendeter Polymerisation enthält das Gemisch noch 0,59 Masse-% Reststyren.

Zur Bereitung des Leimungsmittels wurde die toluolische Lösung mit 800 ml Wasser und 50 ml NH₄OH (25%ig) versetzt und das Toluol als aceotrop abdestilliert.
Die so erhaltene wäßrige Lösung wurde mit Wasser und NH₄OH auf einen Feststoffgehalt von 12 % und einen pH-Wert von 9,4 eingestellt.

### Leimkennwerte

| | Wirkstoffgehalt Masse-% | pH-Wert | Viskosität mPa*s | Säurezahl des Polymeren ml/100 ml HCl |
|---|---|---|---|---|
| Beispiel 1 | 12 | 9,5 | 26 | 200 |
| Beispiel 2 | 12 | 9,6 | 31 | 265 |
| Vergleichsbeispiel | 12 | 9,4 | 1250 | 165 |

### Leimausprüfung

Zur Ausprüfung der Leimungseigenschaften wurde der Cobb-60 Wert in Anlehnung an DIN 53 132 bestimmt.
Als Testpapier diente ein kreidegefülltes Diagrammrohpapier mit einer Flächenmasse von 80 g/m². Die Leimflotte wurde mit einer 5%igen verkleisterten Kartoffelstärke bereitet.

| Beispiel | Cobb-60 Wert | | | | |
|---|---|---|---|---|---|
| | 0,30^{x} | 0,15^{x} | 0,08^{x} | 0,04^{x} | 0,02^{x} |
| 1 | 19,9 | 19,8 | 20,7 | 23,5 | 48 |
| 2 | 19,7 | 19,7 | 19,7 | 25 | 45 |
| Vergleichsbeispiel | 22 | 22,5 | 36,1 | 58 | DS |

| | | | | | |
|---|---|---|---|---|---|
| ^{x} % Wirkstoffgehalt in der Leimflotte | | | | | |
| DS Durchschlag | | | | | |

## Patentansprüche

1. Verfahren zur Herstellung eines Leimungsmittelvorproduktes für Papier und Karton auf der Basis von MSA/Maleinsäurehalbester/Styren-Terpolymeren durch eine radikalische Blockpolymerisation in niedrig siedenden aldehydischen oder ketonischen Lösungsmitteln, dadurch gekennzeichnet, daß in einem Reaktor 20 bis 30 Masseteile des Lösungsmittels, 20 bis 25 Masseteile eines Maleinsäurehalbesters und 40 bis 50 Masseteile Styren vorgelegt werden, dann auf eine Polymerisationstemperatur von 80 bis 130 °C aufgeheizt wird und bei dieser Temperatur ein Gemisch aus 5 bis 15 Masseteilen MSA, 1,5 bis 2 Masseteilen eines Initiators und 45 bis 60 Masseteilen des Lösungsmittels innerhalb von 2 bis 5 Stunden unter Rühren des Reaktionsmediums zudosiert, die anfallende Polymerlösung auf einen Zweiwalzentrockner geleitet und der sich bei einer Walzentemperatur von 70 bis 150 °C auf den Walzen bildende Polymerbelag in Form eines Pulvers abgestreift wird.

2. Verfahren nach Anspruch 1, dadurch gekennzeichnet, daß als Lösungsmittel Aceton oder Methylethylketon eingesetzt wird.

3. Verfahren nach Anspruch 1 und 2, dadurch gekennzeichnet, daß als Maleinsäurehalbester Umsetzungsprodukte von MSA mit primären oder sekundären C₁-C₆ Alkoholen im Molverhältnis 1 : 1 eingesetzt werden.

4. Verfahren nach Anspruch 1 bis 3, dadurch gekennzeichnet, daß bei einer Temperatur von 90 bis 120 °C polymerisiert wird.

5. Verfahren nach Anspruch 1 bis 4, dadurch gekennzeichnet, daß als Initiatoren Peroxide eingesetzt werden, die im Polymerisationsbereich eine Halbwertszeit von 0,1 bis 3 h aufweisen.

6. Verfahren nach Anspruch 1 bis 5, dadurch gekennzeichnet` daß die Walzentemperatur 80 bis 120 °C beträgt.
